# EUROPÄISCHE PATENTANMELDUNG

(11) **EP 2 031 146 A2**
(43) Veröffentlichungstag der Anmeldung: **04.03.2009**
(21) Anmeldenummer: 08017356.0
(22) Anmeldetag: 10.11.2006
(51) Int. Cl.: E04B 9/12, E04B 9/18

(54) **Abhängbare Innenraumdecke und deren Teile**

(30) Priorität: 16.02.2006 DE 202006002567 U
(62) Teilanmeldung aus: 06818456.3
(71) Anmelder: Survey Marketing+Consulting GMBH&CO. KG, 33602 Bielefeld (DE)
(72) Erfinder: Meyer, Peter, H., 33602 Bielefeld (DE); Rudolph, Horst, 33332 Gütersloh (DE)
(74) Vertreter: Gesthuysen, von Rohr & Eggert

(57) **Zusammenfassung**

Die Erfindung betrifft eine abhängbare, nicht tragende Innenraumdecke mit eine Längsrichtung der Decke definierenden Längsträgem (1) und eine Querrichtung der Decke definierenden, die Längsträger (1) seitlich verbindenden Querträgem (2), wobei die Querträger (2) von den Längsträgern (1) getragen werden und wobei zur Abhängung der Längsträger (1) von einer Tragdecke langgestreckte Tragelemente (3) vorgesehen sind. Die Längsträger (1) und die Querträger (2) sind als Strangpreßprofile aus Leichtmetall, insbesondere Aluminium, oder aus einem faserverstärkten Kunststoff ausgeführt. Sie weisen einerseits geschlossene Hohlkammern (6) zur Versteifung, andererseits nach außen offene Aufnahmen (7) und Nuten (8) zur Anbringung von Montage- und Zusatzteilen bzw. zu Verbindungszwecken auf. Gegenstand der Erfindung ist eine besonders zweckmäßige und montagefreundliche Ausgestaltung der Tragelemente (3).

## Beschreibung

Gegenstand der Erfindung ist eine abhängbare, nicht tragende Innenraumdecke mit den Merkmalen des Oberbegriffs von Anspruch 1 sowie ein Tragelement zur Abhängung von Trägern einer Innenraumdecke nach dem Oberbegriff von Anspruch 8.

Eine aus der Praxis bekannte abhängbare Innenraumdecke ("ceiling system" der SURVEY MARKETING + CONSULTING GmbH & Co. KG, Dokumentation 2005) weist eine Längsrichtung der Decke definierende Längsträger und eine Querrichtung der Decke definierende, die Längsträger seitlich verbindende Querträger auf. Die Querträger werden von den Längsträgern getragen. Zur Abhängung der Längsträger von einer tragenden Decke sind langgestreckte Tragelemente vorgesehen. Das Achsmaß der Innenraumdecke beträgt bevorzugt 3,0 m.

Die Längsträger der bekannten Innenraumdecke bestehen aus jeweils zwei voneinander beabstandeten, vertikal ausgerichteten Spanplatten, die über horizontal ausgerichtete, miteinander verschraubte Verbinderplatten und eine verzinkte Verbindungsstange miteinander verbunden sind. An der Verbindungsstange befindet sich ein nach oben ragender Aufhängehaken. Mehrere solcher Verbindungsstangen befinden sich über die Länge eines Längsträgers verteilt an diesem. Die Längsträger sind mittels Zugankern, Drahtseilen oder Gurten an einer tragenden Decke zu befestigen. Bei den Querträgern handelt es sich um einfache, vertikal ausgerichtete Spanplatten, die über Befestigungswinkel an den Längsträgern eingehängt und verschraubt werden.

In manchen Ausführungen der bekannten abhängbaren Innenraumdecke sind die Längsträger ihrerseits an Hilti-Montageschienen, abgekanteten Profilschienen aus Stahl, aufgehängt.

Die bekannte abhängbare, nicht tragende Innenraumdecke, von der die Erfindung ausgeht (DE-A-197 09 823), weist Längsträger und Querträger in Form von relativ komplex gebildeten Strangpreßprofilen aus Leichtmetall, insbesondere aus Aluminium, oder aus faserverstärktem Kunststoff auf. Nach oben offene Aufnahmen mit Hinterschneidungen dienen der Anbringung von langgestreckten Tragelementen, mit denen die Längsträger von einer Tragdecke ausgehend abgehängt werden können. Die Tragelemente sind als Gewindestangen ausgeführt. Jede Gewindestange ist an ihrem in die zugehörige obere Aufnahme eines Längsträgers reichenden Ende in einen Tragnutenstein eingeschraubt. Dieser Tragnutenstein ist längsverschiebbar unterhalb der Hinterschneidungen in der Aufnahme des Längsträgers angeordnet. Eine den Längsträger von außen überfassende, U-förmige Kappe wird mittels einer Kontermutter gegen den Längsträger verspannt, so daß das Tragelement dann festsitzt.

Ist die abgehängte, nicht tragende Innenraumdecke an der Tragdecke montiert, so lassen sich im Nachhinein keine weiteren Tragelemente montieren, ohne Längsträger dabei zu demontieren. Außerdem benötigt die Montage der bekannten Tragelemente entsprechendes Werkzeug.

Der Lehre liegt das Problem zugrunde, die bekannte abhängbare Innenraumdekke sowie ihre Teile dahingehend zu verbessern, daß weitestmöglich auf Werkzeug bei der Montage verzichtet werden kann.

Das zuvor aufgezeigte Problem ist für die abhängbare Innenraumdecke gemäß dem Oberbegriff von Anspruch 1 durch die Merkmale des kennzeichnenden Teils von Anspruch 1 gelöst.

Bevorzugte Ausgestaltungen und Weiterbildungen dieser erfindungsgemäßen Innenraumdecke sind Gegenstand der die Innenraumdecke betreffenden Unteransprüche. Zu den einzelnen Besonderheiten der Ausgestaltungen wird im Rahmen der Erläuterung bevorzugter Ausführungsbeispiele anhand der Zeichnung näher Stellung genommen.

Für sich Gegenstand der Erfindung ist auch ein Tragelement zur Abhängung von Trägern einer Innenraumdecke mit den Merkmalen des Anspruchs 8. Bevorzugte Ausgestaltungen eines solchen Tragelementes sind Gegenstand der Ansprüche 9 bis 12.

Die Längsrichtung der Decke ist durch die Längsträger definiert, die Querrichtung der Decke ist durch die Querträger definiert. Die Längsrichtung eines Trägers ist durch die Extrusionsrichtung des Strangpreßprofils definiert. Diese Längsrichtung des Trägers ist gleichzeitig Definitionsgrundlage für den Begriff der Längsabmessung von Nutensteinen. Das ist die Abmessung in Längsrichtung des zugehörigen Trägers in der Haltestellung des Nutensteins. Demgemäß ist die Querabmessung die Abmessung des Nutensteins quer zur Längsrichtung des Trägers in der Haltestellung des Nutensteins.

Im folgenden wird nun die Erfindung anhand einer lediglich Ausführungsbeispiele darstellenden Zeichnung näher erläutert. In der Zeichnung zeigt
- Fig. 1: in schematischer, perspektivischer Ansicht von unten eine Innen- raumdecke gemäß der Erfindung,
- Fig. 2: in einer perspektivischen Ansicht von der Stirnseite her einen Längsträger für eine Innenraumdecke gemäß Fig. 1,
- Fig. 3: ein Tragelement für Träger einer Innenraumdecke gemäß Fig. 1 in perspektivischer Ansicht (a) sowie in verschiedenen Stationen der Verbindung mit einem Längsträger (b, c, d).

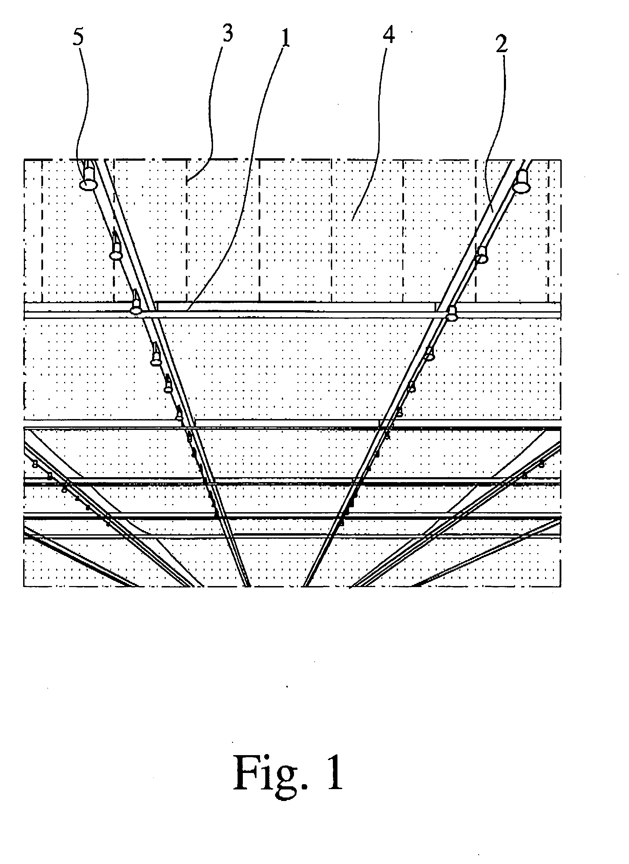

Die in Fig. 1 in einer perspektivischen Ansicht von unten und ausschnittweise dargestellte abgehängte, nicht tragende Innenraumdecke ist eine mobile Systemdecke für zeitlich begrenzten oder dauerhaften Einbau in Messehallen, Veranstaltungshallen, Verkaufsräumen, Verkehrseinrichtungen etc.. Sie wird aufgehängt an einer tragenden Decke (die in Fig. 1 nicht zu erkennen ist), dann handelt es sich um eine abgehängte, nicht tragende Innenraumdecke, sie kann aber auch mit Nutzung einer besonderen Variante der Erfindung auf Bodenstützen stehen, also aufgeständert angeordnet werden. Das ist insbesondere für sehr hohe Hallen eine interessante Alternative, insbesondere auch für den Messebau.

Die in Fig. 1 schematisch und zunächst einmal grundsätzlich dargestellte Innenraumdecke weist Längsträger 1 auf, die eine Längsrichtung der Innenraumdecke definieren. Im dargestellten Beispiel einer erfindungsgemäßen Innenraumdecke sind außerdem vorgesehen Querträger 2, die eine Querrichtung der Decke definieren und im dargestellten und bevorzugten Ausführungsbeispiel die Längsträger 1 seitlich verbinden. Grundsätzlich können, wie nachfolgend noch näher erläutert wird, die Längsträger 1 auch für sich eingesetzt werden. Jedenfalls ist es nicht unbedingt erforderlich, daß die Querträger 2 die Längsträger 1 seitlich miteinander verbinden. Im bevorzugten Ausührungsbeispiel ist das aber der Fall.

Die Längsträger 1 sind die tragenden Komponenten der Innenraumdecke, die Querträger 2 werden von den Längsträgern 1 getragen. Sofern die Längsträger 1 von einer Tragdecke abgehängt werden, erfolgt dies über langgestreckte Tragelemente 3, die in Fig. 1 verdeckt sind und daher nur gestrichelt angedeutet werden.

Die Darstellung in Fig. 1 macht ferner deutlich, daß der Deckencharakter dieser Anordnung aus Längsträgern 1 und Querträgern 2 dadurch erzielt wird, daß Gewebestoffbahnen 4 oberhalb von Längsträgern 1 und Querträgern 2 aufgelegt sind. Diese erstrecken sich zwischen in erster Linie den Längsträgern 1 und sind dort an den Längsträgern 1 vorzugsweise werkzeuglos befestigt. Das Achsmaß der Innenraumdecke wird durch die Querträger 2 im bevorzugten Ausführungsbeispiel auf etwa 3 m bemessen. Die Querträger 2 halten die Längsträger 1 auf Abstand in diesem Achsmaß, die Gewebestoffbahnen 4 können so dann sauber verspannt werden.

Zur werkzeuglosen Befestigung der Gewebestoffbahnen 4 an den Längsträgern 1 können beispielsweise Klettbandbefestigungen dienen. Statt der Gewebestoffbahnen 4 können auch Bahnen aus anderen Materialien, beispielsweise Kunststoffolien verwendet werden, beispielsweise aber auch Metallnetzbahnen. Interessant ist bei dieser Gestaltung der Innenraumdecke jedenfalls, daß oberhalb der Gewebestoffbahnen 4 angeordnete Leuchtmittel, beispielsweise Leuchtstoffröhren, ein diffuses Licht unter der Innenraumdecke im Nutzungsbereich entstehen lassen, also eine gewisse allgemeine Raumhelligkeit erbringen.

Bei der allgemeinen Übersichtsdarstellung in Fig. 1 erkennt man im übrigen, daß die Längsträger 1 und Querträger 2, hier in erster Linie die Querträger 2, als Träger für Strahler 5 genutzt werden, die zusätzlich zu der Grundhelligkeit bestimmte Beleuchtungseffekte zu erzielen erlauben. Dazu wird später noch einiges erläutert.

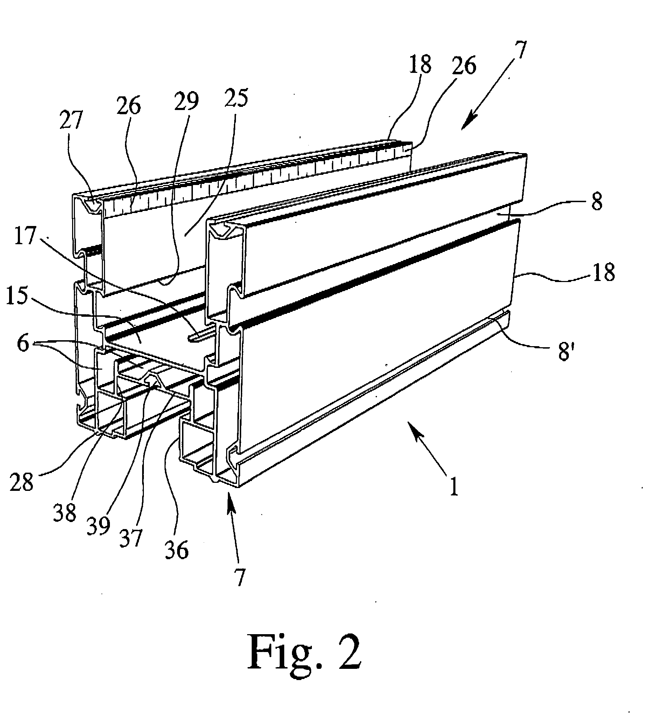

Aus Fig. 2 erkennt man die besondere Gestaltung der Längsträger 1 der erfindungsgemäßen Innenraumdecke. Diese sind als Strangpreßprofile aus Leichtmetall, insbesondere aus Aluminium ausgeführt. Grundsätzlich ist es auch möglich, die Profile aus einem faserverstärkten Kunststoff auszuführen, wenn die zu erwartenden Belastungen geringer sind und/oder geringere Spannweiten vorliegen.

Die Längsträger 1 weisen einerseits geschlossene Hohlkammern 6 zur Versteifung, andererseits nach außen offene Aufnahmen 7 und Nuten 8 zur Anbringung von Montage- und Zusatzteilen bzw. zu Verbindungszwecken auf. Darauf wird im einzelnen später eingegangen.

Fig. 2 der Zeichnung zeigt in perspektivischer Ansicht die Stirnseite der Längsträger 1 und ist deshalb für Erläuterungen zu dem Querschnitt der Längsträger 1 besonders geeignet.

Zunächst ist zu erkennen, daß die Strangpreßprofile so gestaltet sind, daß die Längsträger 1 Einschraubkanäle 9 kleinen Durchmessers aufweisen. Solche Einschraubkanäle 9 dienen dazu, selbstschneidende Schrauben zur Befestigung von Abschlußelementen, Stirnplatten o.dgl. einschrauben zu können. Ihr Durchmesser ist auf die Größe der vorgesehenen Schrauben abgestimmt. Das entspricht der üblichen Verfahrensweise bei Strangpreßprofilen insbesondere aus Leichtmetall, aber auch aus Kunststoff.

In Fig. 2 sieht man in einer perspektivischen Ansicht von der Stirnseite her einen Längsträger 1 mit seinen bereits erwähnten einzelnen Abschnitten. Man erkennt an den Seitenwangen 18 links und rechts jeweils eine Systemnut 8 und darunter jeweils die bereits erwähnte Arretierungsnut 8'. Diese Nuten können auch für andere Zwecke, beispielsweise für Aufhängungen etc. verwendet werden.

Weiter erkennt man nun, daß der Längsträger 1 eine große, nach oben offene Aufnahme 25 aufweist. Dies ist eine der bereits zu Anspruch 1 generell erwähnten Aufnahmen. Die Aufnahme 25 liegt hier in der Mitte des Längsträgers 1, dieser ist also bezogen auf die vertikale Mittelebene spiegelsymmetrisch ausgeführt.

Man erkennt an den Innenrändern der oberen Aufnahme 25 Befestigungsstreifen 26, hier aus Klettband, zur werkzeuglosen Befestigung der bereits erwähnten Gewebestoffbahnen.

Weiter erkennt man seitlich neben der oberen Aufnahme 25 außenliegende Nuten 27, die ebenfalls der Anbringung von Gewebestoffbahnen dienen können, wenn man Befestigungsstreifen 26 nicht haben möchte oder mit schwereren Gewebestoffbahnen arbeitet. Diese Nuten 27 können auch für herunterhängende Stoffbahnen oder sonstige Befestigungen dienen. Im übrigen haben diese Nuten 27 einen Nebeneffekt beim Transport von Längsträgern 1. Man erkennt an der Unterseite des Längsträgers 1 rechts und links symmetrisch angeordnete kleine Wulste 28. Diese greifen beim Aufeinanderstapeln von Längsträgern 1 in die Nuten 27 an der Oberseite ein und verhindern, daß aufeinandergestapelte Längsträger 1 seitlich gegeneinander verrutschen.

An den Innenwänden der oberen Aufnahme 25, vorzugsweise in deren unterer Hälfte, sind einander gegenüberliegende Hinterschneidungen 29 vorgesehen. Deren Funktion wird später noch genauer erläutert.

Bei der allgemeinen Darstellung der Innenraumdecke in Fig. 1 ist bereits auf die Existenz von Tragelementen 3 für den Fall der Abhängung dieser Innenraumdecke hingewiesen worden. Als Tragelemente 3 kommen alle Arten von langgestreckten Systemen in Frage, insbesondere also Gewindestangen, Gurte, Stahlseile etc..

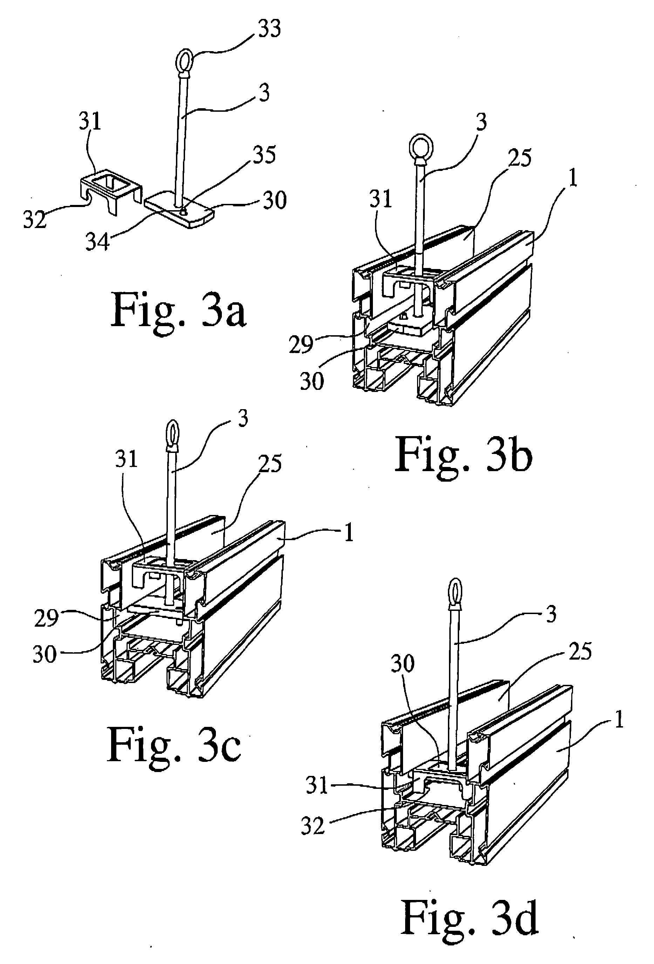

Fig. 3 mit den Teilfiguren a, b, c, d macht deutlich, daß nach der Lehre der Erfindung auch die Aufhängung der Längsträger 1 mittels der Tragelemente 3 im wesentlichen werkzeuglos erfolgen kann. Dazu sind spezielle Tragelemente 3 vorgesehen. Man erkennt, daß jedes Tragelement 3 am in die obere Aufnahme 25 des Längsträgers 1 reichenden Ende einen dort drehbar angebrachten Tragnutenstein 30 aufweist. Die Längsabmessung des Tragnutensteins 30 ist kleiner als die lichte Breite der oberen Aufnahme 25 oberhalb der Hinterschneidungen 29. Die Querabmessung des Tragnutensteins 30 hingegen ist wesentlich größer als die lichte Breite der oberen Aufnahme 25 oberhalb der Hinterschneidungen 29 und kleiner als die lichte Breite in den Hinterschneidungen 29. Im übrigen erkennt man in Fig. 3a, daß der Tragnutenstein 30 an seinen Schmalseiten einseitig abgerundet ist, um ein Hineindrehen in die Hinterschneidungen 29 zu erleichtern. Fig. 3b bis 3d machen deutlich, daß der Tragnutenstein 30 in einer Einführdrehstellung (Fig. 3b) von oben in die Aufnahme 25 einführbar ist und dann in einer dagegen um etwa 90° versetzten Haltedrehstellung (Fig. 3c) in den Hinterschneidungen 29 sicher sitzt.

Nun könnte sich der Tragnutenstein 30 aus der in Fig. 7c erkennbaren Haltedrehstellung durch Vibrationen oder andere äußere Einflüsse von selbst lösen. Um das zu verhindern, ist eine werkzeuglose Drehsicherung 31 vorgesehen, die in Fig. 3a links dargestellt ist. Die Querabmessung der Drehsicherung 31 ist nur wenig geringer als die Breite der oberen Aufnahme 25 oberhalb der Hinterschneidungen 29. Dadurch kann sich die Drehsicherung 31 in der Aufnahme 29 selbst nicht drehen. Die Drehsicherung 31 ist von oben auf den Tragnutenstein 30 aufgesetzt (Fig. 3c, 3d) und umfaßt diesen in dessen Haltedrehstellung (Fig. 3 d) seitlich.

Der Bereich unter dem Tragnutenstein 30 in der Aufnahme 25 oberhalb des Querstegs 15 kann als Kabelkanal genutzt werden. Hier würde die Drehsicherung 31 stören, wenn diese nicht, wie im dargestellten Ausführungsbeispiel vorgesehen, randseitig mit weiten Ausschnitten 32 versehen wäre. Die Drehsicherung 31 ist im dargestellten Ausführungsbeispiel im übrigen als abgekantetes Blechteil, vorzugsweise aus verzinktern Stahlblech ausgeführt und umfaßt das Tragelement 3 von oben ganz locker. Am oberen Ende des Tragelements 3 befindet sich eine Ringöse 33, von der aus dann weitere Tragelemente zur Tragdecke verlaufen können, die hier aber nicht weiter dargestellt sind.

Aus Fig. 3a kann man im übrigen erkennen, daß nach einer weiter bevorzugten Ausführung der Tragnutenstein 30 eine Durchstecköffnung 34 oder eine entsprechende Gewindebohrung für eine Sicherungsschraube 3 5 oder einen Sicherungsstift aufweist. Damit kann man bei Schrägverspannung eine Fixierung des Tragelements 3 am Längsträger 1 gewährleisten, so daß das Tragelement 3 nicht verrutscht.

Wie bereits zuvor erläutert worden ist, bildet die obere Aufnahme 25 in ihrem unteren Bereich, vorzugsweise unterhalb der Hinterschneidungen 29, zweckmäßigerweise einen Kabelkanal für die Verlegung von Kabeln für die Elektrifizierung der Innenraumdecke.

Aus Fig. 2 ergibt sich ferner, daß der Längsträger 1 auch eine große, nach unten offene Aufnahme 36 aufweist. Im dargestellten und insoweit bevorzugten Ausführungsbeispiel befinden sich an den Innenwänden der unteren Aufnahme 36, vorzugsweise in deren oberer Hälfte an einem Deckensteg 37, einander gegenüberliegende Hinterschneidungen 38. Die untere Aufnahme 36 des Längsträgers 1 kann ebenfalls verschiedenen Zwecken dienen, also je nach Bedarf ganz unterschiedlich genutzt werden. Dazu befindet sich am Deckensteg 37 noch eine weitere, mittig verlaufende hinterschnittene Befestigungsnut 39 für Nutensteine, Kabelschuhe o.dgl..

Natürlich können die Längsträger 1 und die Querträger 2 im Rahmen statischer Berechnungen zulässige, im übrigen im wesentlichen beliebige Abmessungen, insbesondere Wandstärken etc. haben. Um eine Vorstellung von in der Praxis relevanten Maßen zu haben ist festzuhalten, daß im dargestellten und bevorzugten Ausführungsbeispiel vorgesehen ist, daß die Breite der Längsträger 1 ca. 100 bis 120 mm beträgt und/oder daß die Höhe der Längsträger 1 ca. 110 bis 130 mm beträgt und/oder daß die Länge der Längsträger 1 mehrere m, vorzugsweise ca. 6 Meter, beträgt. In entsprechender Weise gilt für die Querträger 2, daß die Breite der Querträger 2 ca. 50 bis 70 mm beträgt und/oder daß die Höhe der Querträger 2 ca. 70 bis 90 mm beträgt und/oder daß die Länge der Querträger 2 mehrere Meter, vorzugsweise ca. 3 m, beträgt, also das Achsmaß der Innenraumdecke ca. 3 m beträgt.

## Patentansprüche

1. Abhängbare, nicht tragende Innenraumdecke mit
eine Längsrichtung der Decke definierenden Längsträgern (1) und eine Querrichtung der Decke definierenden, die Längsträger (1) seitlich verbindenden Querträgern (2),
wobei die Querträger (2) von den Längsträgern (1) getragen werden,
wobei die Längsträger (1) und die Querträger (2) als Strangpreßprofile aus Leichtmetall, insbesondere Aluminium, oder aus einem faserverstärkten Kunststoff ausgeführt sind, die einerseits geschlossene Hohlkammern (6) zur Versteifung, andererseits nach außen offene Aufnahmen (7) und Nuten (8) zur Anbringung von Montage- und Zusatzteilen bzw. zu Verbindungszwecken aufweisen,
wobei zur Abhängung der Längsträger (1) von einer Tragdecke langgestreckte Tragelemente (3) vorgesehen sind,
wobei der Längsträger (1) eine vorzugsweise in der Mitte liegende, große, nach oben offene Aufnahme (25) aufweist, an deren Innenwänden, vorzugsweise in deren unterer Hälfte, einander gegenüberliegende Hinterschneidungen (29) vorgesehen sind und
wobei jedes Trageelement (3) am in die obere Aufnahme (25) des Längsträgers (1) reichenden Ende einen Tragnutenstein (30) aufweist,
**dadurch gekennzeichnet,**
**daß** der Tragnutenstein (30) drehbar angebracht ist,
**daß** die Längsabmessung des Tragnutensteins (30) kleiner ist als die lichte Breite der oberen Aufnahme (25) oberhalb der Hinterschneidungen (29) und die Querabmessung des Tragnutensteins (30) wesentlich größer ist als die lichte Breite der oberen Aufnahme (25) oberhalb der Hinterschneidungen (29) und kleiner ist als die lichte Breite in den Hinterschneidungen (29),
so daß der Tragnutenstein (30) in einer Einführdrehstellung von oben in die Aufnahme (25) einführbar ist und in einer dagegen um vorzugsweise 90° versetzten Haltedrehstellung in den Hinterschneidungen (29) sicher sitzt.

2. Innenraumdecke nach Anspruch 1, **dadurch gekennzeichnet,**
**daß** der Tragnutenstein (30) an seinen Schmalseiten einseitig abgerundet ist, so daß ein Hineindrehen in die Hinterschneidungen (29) erleichtert ist.

3. Innenraumdecke nach Anspruch 1 oder 2, **dadurch gekennzeichnet,**
**daß** dem Tragnutenstein (30) eine Drehsicherung (31) zugeordnet ist, deren Querabmessung nur wenig geringer ist als die Breite der oberen Aufnahme (25) oberhalb der Hinterschneidungen (29) und die von oben auf den Tragnutenstein (30) aufgesetzt ist und diesen in der Haltedrehstellung seitlich umfaßt.

4. Innenraumdecke nach Anspruch 3, **dadurch gekennzeichnet,**
**daß** die Drehsicherung (31) als abgekantetes Blechteil, vorzugsweise aus verzinktem Stahlblech ausgeführt und, vorzugsweise, randseitig mit weiten Ausschnitten (32) versehen ist.

5. Innenraumdecke nach einem der Ansprüche 1 bis 4, **dadurch gekennzeichnet,**
**daß** der Tragnutenstein (30) eine Durchstecköffnung (34) o.dgl. für eine Sicherungsschraube (35) oder einen Sicherungsstift aufweist.

6. Innenraumdecke nach einem der Ansprüche 1 bis 5, **dadurch gekennzeichnet,**
**daß** die obere Aufnahme (25) in ihrem unteren Bereich, vorzugsweise unterhalb der Hinterschneidungen (29), einen Kabelkanal bildet.

7. Innenraumdecke nach einem der Ansprüche 1 bis 6, **dadurch gekennzeichnet,**
**daß** die Tragelemente (3) als Gewindestangen ausgeführt sind.

8. Tragelement zur Abhängung von Trägern einer Innenraumdecke, insbesondere einer Innenraumdecke nach einem der Ansprüche 1 bis 7,
wobei das Tragelement (3) langgestreckt ausgeführt ist und an seinem in eine obere Aufnahme eines Trägers (1, 2) der Innenraumdecke reichenden Ende einen Tragnutenstein (30) aufweist,
**dadurch gekennzeichnet,**
**daß** der Tragnutenstein (30) drehbar angebracht ist,
**daß** die Längsabmessung des Tragnutensteins (30) kleiner ist als seine Querabmessung und
**daß** der Tragnutenstein (30) aus einer Einführdrehstellung in eine dagegen um vorzugsweise 90° versetzte Haltedrehstellung drehbar ist.

9. Tragelement nach Anspruch 8, **dadurch gekennzeichnet,**
**daß** der Tragnutenstein (30) an seinen Schmalseiten einseitig abgerundet ist, so daß ein Hineindrehen in die Hinterschneidungen (29) erleichtert ist.

10. Tragelement nach Anspruch 8 oder 9, **dadurch gekennzeichnet,**
**daß** dem Tragnutenstein (30) eine Drehsicherung (31) zugeordnet ist, deren Querabmessung nur wenig geringer ist als die Breite der oberen Aufnahme (25) oberhalb der Hinterschneidungen (29) und die von oben auf den Tragnutenstein (30) aufgesetzt ist und diesen in der Haltedrehstellung seitlich umfaßt.

11. Tragelement nach Anspruch 10, **dadurch gekennzeichnet,**
**daß** die Drehsicherung (31) als abgekantetes Blechteil, vorzugsweise aus verzinktem Stahlblech ausgeführt und, vorzugsweise, randseitig mit weiten Ausschnitten (32) versehen ist.

12. Tragelement nach einem der Ansprüche 8 bis 11, **dadurch gekennzeichnet, daß** der Tragnutenstein (30) eine Durchstecköffnung (34) o.dgl. für eine Sicherungsschraube (35) oder einen Sicherungsstift aufweist.
